# EUROPÄISCHE PATENTSCHRIFT

(11) **EP 0 769 259 B1**
(45) Veröffentlichungstag und Bekanntmachung des Hinweises auf die Patenterteilung: **09.06.1999**
(21) Anmeldenummer: 95116552.1
(22) Anmeldetag: 20.10.1995
(51) Int. Cl.: A47B 13/02, F16B 12/40

(54) **Eckverbinder**
Corner connector
Joint d'angle

(43) Veröffentlichungstag der Anmeldung: 23.04.1997
(73) Patentinhaber: SCHÜCO International KG, 33609 Bielefeld (DE)
(72) Erfinder: Diekmann, Bernd, Dipl.-Ing., 33790 Halle/Westf. (DE)
(74) Vertreter: Stracke, Alexander, Dipl.-Ing.

(56) Entgegenhaltungen:
- DE-U- 9 100 699
- DE-U- 9 409 435
- GB-A- 632 618
- LU-A- 68 055
- US-A- 3 638 803
- US-A- 3 883 257
- US-A- 3 886 710

## Beschreibung

Die Erfindung bezieht sich auf einen Eckverbinder für auf Gehrung geschnittene Hohlprofilstäbe, die zur Stirnseite geöffnete Hohlkammern aufweisen, in die Ausleger des Eckverbinders einführbar sind.

Die GB-A-632 618 zeigt und beschreibt mit Eckverbindern der genannten Art ausgerüstete Rahmenkonstruktionen für ein Schrankmöbel, bei denen die Ausführung nach der Fig. 5 auf Gehrung geschnittene Rahmenprofile aufweist. Diese sind in der Ecke auf die Schenkel bzw. Ausleger eines Verbinders geschoben und liegen in der Gehrungsebene flächig aneinander, wobei die Profiltoleranzen direkt zur Auswirkung kommen. Ferner wirkt sich die Scharfkantigkeit der Ränder der Gehrungsflächen der Rahmenprofile insbesondere bei Möbeln und deren Reinigung nachteilig aus. Weiterhin sind im Eckbereich Schrankfüße als zusätzliche Beschlagteile vorgesehen, die mit ihrem Befestigungsteil in einer Nut des Rahmenprofils eingesetzt und festgelegt sind, so daß der konstruktive Aufwand der Verankerung der Möbelfüße groß ist.

Der Erfindung liegt die Aufgabe zugrunde, einen Eckverbinder der eingangs genannten Art so zu gestalten, daß die Toleranzen der in der Gehrungsecke zusammenstoßenden Bauteile kaschiert werden und dem Eckverbinder ein Aufnahmeteil zugeordnet wird, ohne daß es die Verbindung behindert.

Diese Aufgabe wird erfindungsgemäß durch eine zwischen der Innenecke und der Außenecke sich erstreckende Trennwand gelöst, die Anschlagflächen für die Gehrungsflächen der Hohlprofilstäbe bildet und im Bereich der Innenecke oder/und der Außenecke mit einem Aufnahmeteil versehen ist.

Da die Gehrungsflächen der Rahmenprofile in der Gehrungsebene nicht mehr aneinanderliegen, sondern gegen die Trennwand stoßen, lassen sich die Toleranzen der Rahmenprofile kaschieren. Sie sind nicht mehr wahrnehmbar, wenn die Außenkontur der Trennwand die Außenkontur der Hohlprofilstäbe überragt. Hierdurch ergibt sich weiterhin, daß die scharfkantigen Schnittkanten der Rahmenprofile beim Reinigen solcher Möbelteile nicht mehr zugänglich sind und daß damit auch die Verletzungsgefahr ausgeschaltet wird.

Die Trennwand kann in ihrer Dicke und in ihrer Form so ausgelegt werden, daß zusätzliche gestalterische Aufgaben erfüllt werden.

Von der Trennwand geht an jeder Seite mindestens ein Ausleger aus, der in eine Hohlkammer der Hohlprofilstäbe eingreift.

Dadurch, daß das Aufnahmeteil an der Trennwand angeordnet ist, entfallen Befestigungsmittel im Bereich der Rahmenprofile.

Das Aufnahmeteil kann je nach Verwendungszweck entsprechend gestaltet sein. Unter Verwendung des Aufnahmeteils können beispielsweise Zwischenböden, Deckböden u.dgl. festgelegt werden.

Das Aufnahmeteil kann als Buchse ausgebildet sein, welche mit einer Zentrierbohrung versehen ist. Dadurch können gezielt weitere Bauteile festgelegt werden oder es können von der Buchse entsprechende Befestigungsmittel aufgenommen werden.

Weitere Merkmale der Erfindung ergeben sich aus den Unteransprüchen.

Ein Ausführungsbeispiel des erfindungsgemäßen Eckverbinders ist in den Zeichnungen dargestellt und wird im folgenden beschrieben. Es zeigen:
- Figur 1: einen unter Verwendung von Eckverbindern gebildeten Rahmen in einer Teildraufsicht,
- Figur 2: den Eckverbinder als Einzelteil in einer Draufsicht,
- Figur 3: einen Schnitt längs der Linie III-III in Fig. 2 und
- Figur 4: einen Schnitt längs der Linie IV-IV in der Fig. 2.

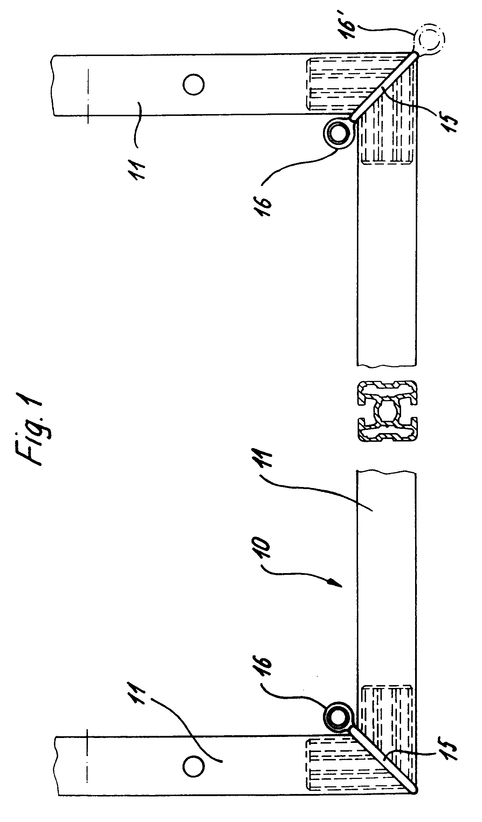

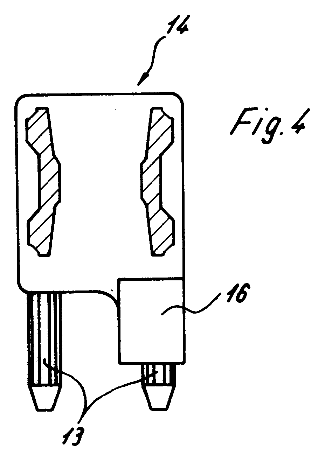

Der in der Fig. 1 teilweise dargestellte Rahmen 10 besteht aus den Hohlprofilstäben 11, die rechtwinklig miteinander verbunden sind. Die einander zugewandten Stirnflächen der Hohlprofilstäbe 11 sind auf Gehrung geschnitten. Die Hohlprofilstäbe 11 sind im dargestellten Ausführungsbeispiel an zwei einander gegenüberliegenden Seiten mit hinterschnittenen Nuten versehen. Die beiden anderen Seiten sind geschlossen, so daß zwei geschlossene Hohlkammern entstehen, in die Ausleger 12,13 eines Eckverbinders 14 eingesteckt sind.
Der in den Figuren 2 bis 4 dargestellte Eckverbinder 14 ist mit einem Eckteil in Form einer Trennwand 15 versehen, die unter einem Winkel von 45° zu den rechtwinklig zueinander stehenden Auslegern 12,13 verläuft. Die Fig. 1 zeigt, daß die Gehrungsschnittflächen der Hohlprofilstäbe 11 gegen die äußeren Flächen der Trennwand 15 stoßen. An der Trennwand 15 ist ein Aufnahmeteil in Form einer Buchse 16 angesetzt, die bei der Ausführung nach den Fig. 2 bis 4 der inneren Ecke zugeordnet ist. In der Figur 1 ist andeutungsweise an der äußeren Ecke noch in strichpunktierten Linie eine weitere Buchse 16' angedeutet. Damit soll dargestellt werden, daß die Trennwand 16 nicht nur an beiden Stirnenden mit einem Aufnahmeteil versehen werden kann, sondern daß wahlweise auch die eine oder die andere Stirnfläche dazu benutzt werden kann. Die Bohrung der Buchse ist eine Zentrierbohrung. Insbesondere die Fig. 4 zeigt, daß die Ausleger 12,13 im Querschnitt so gestaltet sind, daß sie schließend in die beiden geschlossenen Hohlkammern der Hohlprofilstäbe 11 eingesteckt werden können.

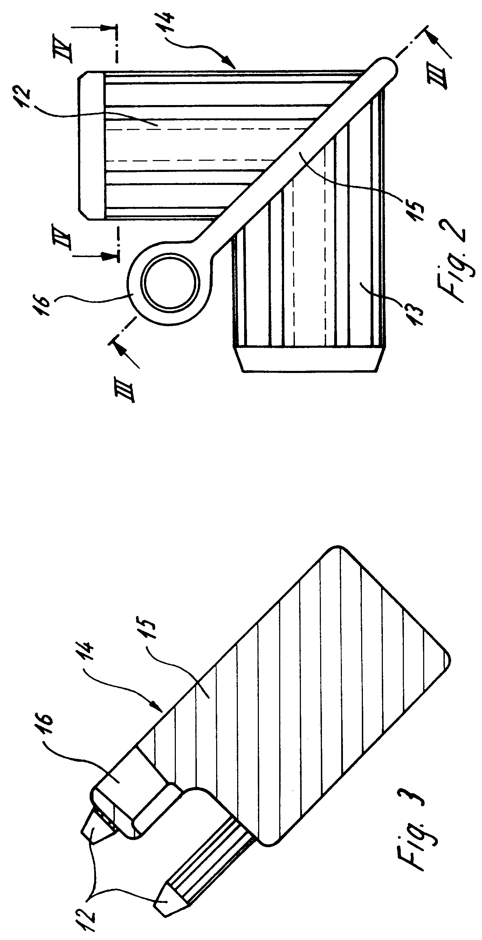

Die Fig. 3 und 4 zeigen, daß sich die Buchse 16 nicht über die gesamte Höhe des Eckverbinders 14 erstreckt, sondern nur in etwa über die halbe Höhe. Außerdem liegt eine Stirnfläche fluchtend zu der zugeordneten Außenfläche des Eckverbinders 14. Bei dem Ausführungsbeispiel nach den Fig. 1 bis 4 sind die Ausleger 12,13 jeweils aus zwei Schenkeln gebildet, die an das jeweilige Profil der Hohlprofilstäbe angepaßt sind.

## Patentansprüche

1. Eckverbinder für auf Gehrung geschnittene Hohlprofilstäbe (11), die zur Stirnseite geöffnete Hohlkammern aufweisen, in die Ausleger (12,13) des Eckverbinders einführbar sind, **gekennzeichnet** durch eine zwischen der Innenecke und der Außenecke sich erstreckende Trennwand (15), die Anschlagflächen für die Gehrungsflächen der Hohlprofilstäbe (11) bildet, und im Bereich der Innenecke oder/und der Außenecke mit einem Aufnahmeteil (16,16') versehen ist, und daß die Außenkontur der Trennwand (15) die Außenkontur der Hohlprofilstäbe (11) überragt.

2. Eckverbinder nach Anspruch 1, dadurch gekennzeichnet, daß das Aufnahmeteil (16,16') als Buchse ausgebildet und die Bohrung der Buchse eine Zentrierbohrung ist.

3. Eckverbinder nach Anspruch 1 oder 2, dadurch gekennzeichnet, daß eine Stirnfläche des Aufnahmeteils (16,16') mit der zugeordneten Außenfläche der Trennwand (15) fluchtet.

4. Eckverbinder nach einem der Ansprüche 2 und 3, dadurch gekennzeichnet, daß die Höhe des Aufnahmeteils (16,16') geringer ist als die Höhe des Eckverbinders.

5. Eckverbinder nach Anspruch 4, dadurch gekennzeichnet, daß das Aufnahmeteil (16,16') sich etwa über die halbe Höhe des Eckverbinders erstreckt.

## Claims

1. Angle connector for mitre-cut hollow profile rods (11) which have hollow chambers open towards the end face, in which arms (12, 13) of the angle connector can be inserted, characterised by a separating wall (15) extending between the inside angle and the outside angle which forms stopping faces for the mitred surfaces of the hollow profile rods (11), and is provided in the area of the inside angle and/or the outside angle with a receiving part (16, 16'), and in that the outside contour of the separating wall (15) projects over the outside contour of the hollow profile rod (11).

2. Angle connector according to claim 1, characterised in that the receiving part (16, 16') is configured as a bushing and the bore of the bushing is a centring bore.

3. Angle connector according to claim 1 or 2, characterised in that an end face of the receiving part (16, 16') is flush with the associated outside surface of the separating wall (15).

4. Angle connector according to one of claims 2 and 3, characterised in that the height of the receiving part (16, 16') is less than the height of the angle connector.

5. Angle connector according to claim 4, characterised in that the receiving part (16, 16') extends over approximately half the height of the angle connector.

## Revendications

1. Equerre d'assemblage pour barres profilées creuses (11) coupées en onglet qui présentent des chambres creuses ouvertes vers le côté frontal, dans lesquelles peuvent être introduits des bras (12, 13) de l'équerre d'assemblage, caractérisée par une cloison (15) s'étendant entre l'angle intérieur et l'angle extérieur, qui forme des surfaces de butée pour les surfaces en onglet des barres profilées creuses (11), et qui est pourvue d'un élément formant logement (16, 16') dans la zone de l'angle intérieur ou/et de l'angle extérieur, et en ce que le contour extérieur de la cloison (15) dépasse du contour extérieur des barres profilées creuses (11).

2. Equerre d'assemblage selon la revendication 1, caractérisée en ce que l'élément formant logement (16, 16') est réalisé en tant que douille et le perçage de la douille est un perçage de centrage.

3. Equerre d'assemblage selon la revendication 1 ou 2, caractérisée en ce qu'une face frontale de l'élément formant logement (16, 16') est alignée avec la surface extérieure correspondante de la cloison (15).

4. Equerre d'assemblage selon l'une des revendications 2 et 3, caractérisée en ce que la hauteur de l'élément formant logement (16, 16') est inférieure à la hauteur de l'équerre d'assemblage.

5. Equerre d'assemblage selon la revendication 4, caractérisée en ce que l'élément formant logement (16, 16') s'étend à peu près sur la moitié de la hauteur de l'équerre d'assemblage.
